# EUROPEAN PATENT APPLICATION

(11) **EP 3 680 221 A1**
(43) Date of publication of application: **15.07.2020**
(21) Application number: 19747898.5
(22) Date of filing: 30.01.2019
(51) Int. Cl.: C03B 18/22, C03B 18/04, C03B 18/18, C03B 18/16

(54) **APPARATUS FOR MANUFACTURING FLOAT GLASS**

(30) Priority: 30.01.2018 KR 20180011310
(71) Applicant: LG CHEM, LTD., Yeongdeungpo-gu, Seoul 07336 (KR)
(72) Inventor: KIM, Woo Hyun, Daejeon 34122 (KR); MOON, Won Jae, Daejeon 34122 (KR); PARK, Heui Joon, Daejeon 34122 (KR); HWANG, Du Sun, Daejeon 34122 (KR); CHOI, Jun Bo, Daejeon 34122 (KR)
(74) Representative: Goddar, Heinz J.
(86) International application number: PCT/KR2019/001314
(87) International publication number: WO 2019/151782

(57) **Abstract**

A float glass manufacturing apparatus according to exemplary embodiments of the present invention includes a float bath which accommodates molten metal and allows a glass ribbon to flow on a liquid surface of the molten metal in a first direction; a ceiling unit which is disposed to be spaced upward apart from the float bath and elongated in the first direction; and a cooling module which is disposed in at least a part of an entire region of the ceiling unit in the first direction and supplies downward a cooling gas that cools the glass ribbon.

## Description

### [Technical Field]

Exemplary embodiments of the present invention relate to a float glass manufacturing apparatus, and particularly, to a float glass manufacturing apparatus having a cooling module capable of cooling a glass ribbon formed during a process of manufacturing plate glass by a float method.

### [Background Art]

In general, a plate glass manufacturing apparatus using a float method forms a glass ribbon by continuously supplying molten glass and allowing the molten glass to flow on molten metal accommodated in a float bath. The formed glass ribbon is supplied into and annealed in an annealing lehr disposed adjacent to an outlet of the float bath. The glass ribbon is discharged to the outside of the annealing lehr and then cooled so that a temperature thereof nearly reaches a room temperature. Thereafter, the glass ribbon is cut to have a predetermined dimension and thus manufactured as plate glass.

Meanwhile, during the process in which the glass ribbon is formed as the molten glass is supplied into the float bath and flows so that a width thereof is increased, a temperature of a central portion, which is formed at a center of an overall width of the glass ribbon, is higher than a temperature of an outer portion close to a width end of the glass ribbon because of the nature of the molten glass such as viscosity of the molten glass that affects a flow of the molten glass. This difference in temperature affects a flow of the glass ribbon, which makes it difficult to manufacture the plate glass with high quality.

Further, the glass ribbon may need to be cooled during the process of forming the glass ribbon. In general, a method of allowing the glass ribbon to exchange heat with a water-cooled cooler, which is disposed above the glass ribbon and extends in a width direction of the glass ribbon, may be considered as a principal method of cooling the glass ribbon.

However, in the case in which the water-cooled cooler, which extends in the width direction of the glass ribbon, is used for the process of producing plate glass having a large width, the cooler sags due to a load of a central portion of the cooler. For this reason, there may be a problem in that a liquid surface of the glass ribbon may be inadvertently formed, and volatile substances existing at the periphery of the float bath are condensed on a surface of the cooler and fall onto the liquid surface of the glass ribbon, which may cause defects.

The above-mentioned background art is technical information thought out to make the invention or learned in the course of making the invention by the inventor, and cannot be thus said to be technical information known to the public before filing the invention.

### [Disclosure]

### [Technical Problem]

Exemplary embodiments of the present invention provide a float glass manufacturing apparatus having a cooling module which supplies a cooling gas capable of cooling a glass ribbon while making a temperature uniform over an overall width of the glass ribbon in order to manufacture plate glass with high quality.

### [Technical Solution]

A float glass manufacturing apparatus according to a first exemplary embodiment of the present invention includes a float bath which accommodates molten metal and allows a glass ribbon to flow on a liquid surface of the molten metal in a first direction; a ceiling unit which is disposed to be spaced upward apart from the float bath and elongated in the first direction; and a cooling module which is disposed in at least a part of an entire region of the ceiling unit in the first direction and supplies downward a cooling gas that cools the glass ribbon.

In the present exemplary embodiment, the cooling module may supply the cooling gas at least to a central portion based on an overall width of the glass ribbon in a second direction that intersects the first direction.

In the present exemplary embodiment, a cooling rate, which indicates a degree to which the glass ribbon is cooled by the cooling module, may vary over the overall width of the glass ribbon.

In the present exemplary embodiment, the cooling rate may be lower at an outer portion outside the central portion than at the central portion based on the overall width of the glass ribbon.

In the present exemplary embodiment, a discharge flow rate at which the cooling gas supplied by the cooling module is discharged may vary over the overall width of the glass ribbon.

In the present exemplary embodiment, the discharge flow rate of the cooling gas may be lower at an outer portion outside the central portion than at the central portion based on the overall width of the glass ribbon.

In the present exemplary embodiment, the float glass manufacturing apparatus may include a heating module which has a heating unit positioned between the float bath and the ceiling unit to heat the glass ribbon.

In the present exemplary embodiment, the heating unit and the cooling module may be disposed to be spaced apart from each other in the first direction.

In the present exemplary embodiment, a first spacing distance, which is a distance between the float bath and a discharge position at which the cooling gas supplied by the cooling module is discharged, may be equal to or smaller than a second spacing distance which is a distance between the heating unit and the float bath.

In the present exemplary embodiment, the cooling module may be disposed in a region corresponding to a section in which a width of the glass ribbon is decreased in an entire region of the ceiling unit in the first direction.

In the present exemplary embodiment, the cooling module may have multiple discharge tubes provided in a second direction to discharge the cooling gas.

In the present exemplary embodiment, the float glass manufacturing apparatus may include a sensor unit which detects a change in temperature of the glass ribbon between an upstream point positioned upstream from the cooling module in the first direction and a downstream point positioned downstream from the cooling module.

In the present exemplary embodiment, the cooling module may include a chamber which is disposed above the ceiling unit and accommodates the cooling gas supplied from the outside, and a discharge tube which is disposed to vertically penetrate the ceiling unit and discharges downward the cooling gas accommodated in the chamber.

In a second exemplary embodiment of the present invention, a degree, to which a discharge position at which the cooling gas supplied by the cooling module is discharged is spaced upward apart from the float bath, may vary over the overall width of the glass ribbon.

In the present exemplary embodiment, the degree to which the discharge position of the cooling gas is spaced upward apart from the float bath may be larger at an outer portion outside the central portion than at the central portion based on the overall width of the glass ribbon.

In a third exemplary embodiment of the present invention, the chamber may be partitioned, by a partition wall, into multiple unit chambers disposed in the second direction that intersects the first direction of the glass ribbon.

### [Advantageous Effects]

The float glass manufacturing apparatus according to the exemplary embodiments of the present invention has the cooling module which supplies a cooling gas capable of cooling the glass ribbon while making a temperature uniform over an overall width of the glass ribbon, and as a result, it is possible to make a flow of the glass ribbon uniform and thus to manufacture plate glass with optically high quality.

### [Description of Drawings]

FIG. 1 is a side view schematically illustrating a float glass manufacturing apparatus according to exemplary embodiments of the present invention when viewed from the lateral side.
FIG. 2 is a top plan view schematically illustrating a float bath illustrated in FIG. 1 when viewed from above to below.
FIG. 3 is a front view schematically illustrating a float glass manufacturing apparatus according to a first exemplary embodiment of the present invention when viewed from the front side.
FIG. 4 is a front view schematically illustrating a modified example of the float glass manufacturing apparatus according to the first exemplary embodiment of the present invention when viewed from the front side.
FIG. 5 is a front view schematically illustrating a float glass manufacturing apparatus according to a second exemplary embodiment of the present invention when viewed from the front side.
FIG. 6 is a front view schematically illustrating a float glass manufacturing apparatus according to a third exemplary embodiment of the present invention when viewed from the front side.

### <Explanation of Reference Numerals and Symbols>

1000: Float glass manufacturing apparatus 1100: Float bath
1110: Roller 1200: Ceiling unit
1210: Cooling module 1211: Discharge position
1212: Chamber 1213: Discharge tube
1214: Partition wall 1220: Heating module
1221: Heating unit 1230: Sensor unit
1240: Brick unit 1250: Gas supply channel
M: Central portion d1: First direction
d2: Second direction h1: First spacing distance
h2: Second spacing distance

### [Mode for Invention]

The present invention will be apparent with reference to exemplary embodiments to be described below in detail together with the accompanying drawings. However, the present invention is not limited to the exemplary embodiments disclosed herein but will be implemented in various forms. The exemplary embodiments are provided so that the present invention is completely disclosed, and a person with ordinary skill in the art can fully understand the scope of the present invention. Therefore, the present invention will be defined only by the scope of the appended claims. Meanwhile, the terms used in the present specification are for explaining the exemplary embodiments, not for limiting the present invention. Unless particularly stated otherwise in the present specification, a singular form also includes a plural form. In addition, the terms such as "comprises (includes)" and/or "comprising (including)" used in the specification do not exclude presence or addition of one or more other constituent elements, steps, operations, and/or elements, in addition to the mentioned constituent elements, steps, operations, and/or elements. The terms such as "first" and "second" may be used to describe various constituent elements, but the constituent elements should not be limited by the terms. These terms are used only to distinguish one constituent element from another constituent element.

Hereinafter, exemplary embodiments of the present invention will be described in detail with reference to the accompanying drawings.

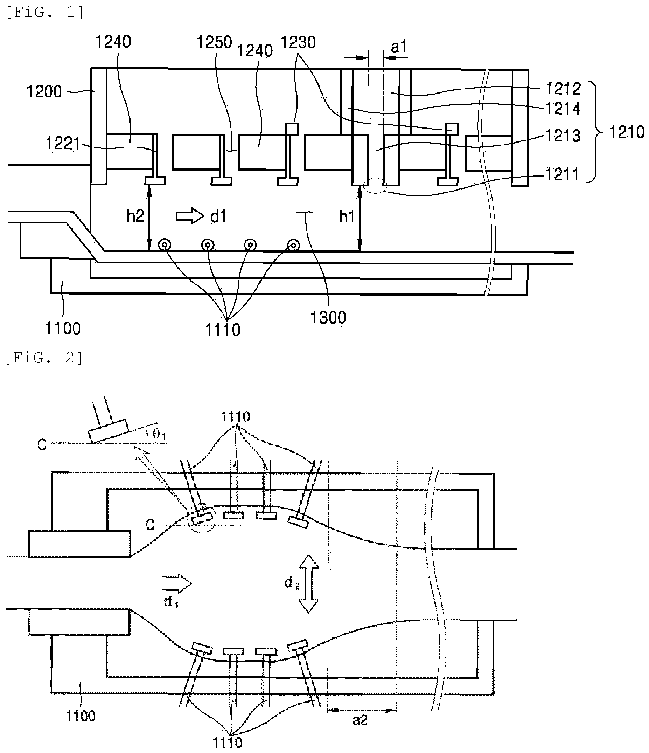

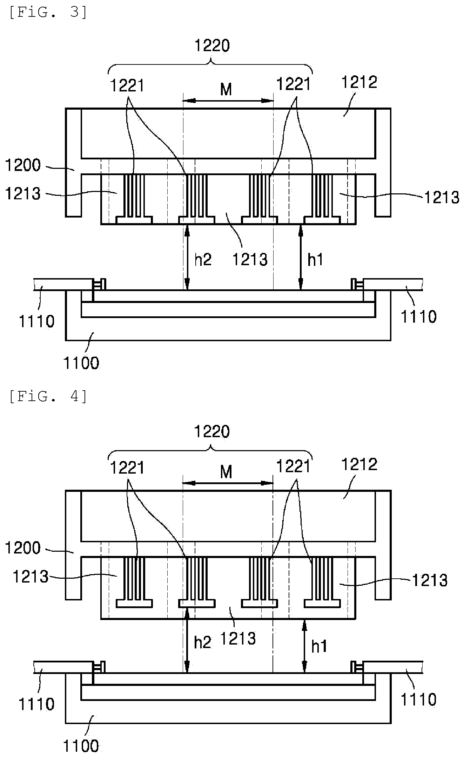

FIG. 1 is a side view schematically illustrating a float glass manufacturing apparatus according to exemplary embodiments of the present invention when viewed from the lateral side. FIG. 2 is a top plan view schematically illustrating a float bath illustrated in FIG. 1 when viewed from above to below. FIG. 3 is a front view schematically illustrating a float glass manufacturing apparatus according to a first exemplary embodiment of the present invention when viewed from the front side.

Referring to FIGS. 1 to 3, the first exemplary embodiment of the present invention relates to a float glass manufacturing apparatus 1000, and particularly, to the float glass manufacturing apparatus 1000 which has a cooling module 1210 capable of cooling a glass ribbon while reducing a difference in temperature of the glass ribbon that is not uniform in a width direction of the glass ribbon when forming the glass ribbon during a process of manufacturing plate glass by using a float method.

The float glass manufacturing apparatus 1000 according to the first exemplary embodiment of the present invention may include a float bath 1100, a ceiling unit 1200, the cooling module 1210, and a heating module 1220.

The float bath 1110 may be a receiving furnace shaped to be opened at an upper side thereof so as to receive molten metal. Here, the molten metal may include, for example, molten tin or a molten tin alloy and may have larger specific gravity than molten glass. The molten metal may be maintained at a high temperature (about 600°C to about 1,100°C). The float bath 1100 may include therein a refractory material in order to accommodate the high-temperature molten metal. The float bath 1100 may include an inlet through which the molten glass is supplied, and an outlet through which the molten glass flows and is formed and discharged as the glass ribbon. As the molten glass flows on a liquid surface of the molten metal in a first direction d1 from the inlet toward the outlet of the float bath 1100, the glass ribbon may be formed in the form of a ribbon elongated in the first direction d1.

The ceiling unit 1200 is disposed to be spaced upward apart from the float bath 1100 and elongated in the first direction d1. The ceiling unit 1200 is positioned above the float bath 1110 and may isolate the float bath 1110 from the outside. The ceiling unit 1200 may be formed such that brick units 1240 each having a predetermined thickness are arranged in the first direction d1. Since the ceiling unit 1200 is disposed above the float bath 1100 and the float bath 1100 is disposed below the ceiling unit 1200, a float chamber 1300, which is a space between the ceiling unit 1200 and the float bath 1100, may be formed. Each of the brick units 1240, which constitute the ceiling unit 1200, may be a refractory brick in order to accommodate high-temperature air in the float chamber 1300 which is heated by the high-temperature molten metal and the high-temperature molten glass. The refractory brick may endure a high temperature, and the refractory brick is not excessively softened or changed in volume at a high temperature. The refractory brick may have excellent corrosion resistance and abrasion resistance against gases or slag. The float chamber 1300 may be filled with a reducing gas including nitrogen N₂ and hydrogen H₂ in order to prevent oxidation of the molten metal and to prevent a chemical reaction between the molten metal and fine substances produced by volatilization of the molten glass. The ceiling unit 1200 may include gas supply channels 1250 through which the reducing gas may be supplied. Each of the gas supply channels 1250 may be a space between the brick units 1240 or a tubular member disposed in the space between the brick units 1240. The reducing gas may be supplied into the float chamber 1300 from an upper space of the ceiling unit 1200 through the gas supply channels 1250 formed in the ceiling unit 1200. In addition, a gas pressure in the float chamber 1300 may be set to be higher than the atmospheric pressure in order to prevent an inflow of air from the outside.

The cooling module 1210 may be disposed in at least a part of the entire region of the ceiling unit 1200 in the first direction d1 and may supply downward a cooling gas capable of cooling the glass ribbon.

The cooling gas may be a low-temperature reducing gas including nitrogen N₂ and hydrogen H₂ in order to prevent oxidation of the molten metal and to prevent a chemical reaction between the molten metal and the fine substances produced by volatilization of the molten glass. For example, the low-temperature reducing gas may have a temperature of about 30°C and may be supplied into the upper space of the ceiling unit 1200. When the reducing gas is accommodated in the upper space of the ceiling unit 1200, a temperature of the reducing gas may be raised to a temperature of about 100°C or more to about 150°C or less by heat transferred from the float chamber 1300.

The cooling module 1210 may be disposed in a second direction d2 that intersects the first direction d1 which is a flow direction of the glass ribbon. The second direction d2 may be a width direction of the glass ribbon. The cooling module 1210 may include a discharge tube 1213 through which the cooling gas is discharged. The discharge tube 1213 may vertically penetrate a discharge tube block disposed in the form of a block that protrudes downward from the ceiling unit 1200, such that the discharge tube 1213 may have a space in which a fluid may flow. The cooling gas may be discharged through the discharge tube 1213. The discharge tube 1213 may extend in the second direction d2 so that the cooling gas is supplied over a predetermined length region in the width direction of the glass ribbon. The cooling gas may be supplied over an overall width of the glass ribbon. Here, the overall width of the glass ribbon is a predetermined width in the first direction d1 which is the flow direction of the glass ribbon. The overall width of the glass ribbon may define an imaginary region formed from one end to the other end that define the width of the glass ribbon. The multiple discharge tubes 1213 may be provided in the second direction d2 of the glass ribbon. The multiple discharge tubes 1213 may be disposed at a constant interval in the second direction d2 in order to supply the cooling gas over the overall width of the glass ribbon.

The cooling module 1210 may include a chamber 1212 that accommodates the cooling gas. The chamber 1212 may be disposed above the ceiling unit 1200 and have a space capable of accommodating the cooling gas supplied from the outside. The chamber 1212 may include a communication port that may communicate with the discharge tube 1213 which is disposed to vertically penetrate the ceiling unit 1200. The cooling gas accommodated in the chamber 1212 may be discharged to the communication port and supplied downward by being guided along the discharge tube 1213. The chamber 1212 may extend in the second direction d2.

Meanwhile, a temperature of the glass ribbon may decrease toward outer portions, which become close to ends in the width direction that defines the width of the glass ribbon, from a central portion M positioned at a relative center of the overall width of the glass ribbon which is defined in the second direction d2 which is the width direction of the glass ribbon. The reason is as follows. The inlet through which the molten glass is introduced is formed at one end of the float bath 1100 which is positioned at a center based on the width of the float bath 1100. A width of the inlet may be smaller than the width of the float bath 1100. When the molten glass is introduced from the inlet, the molten glass is introduced in the first direction d1 while being concentrated in the central region based on the width of the float bath 1100, such that the glass ribbon is formed. Therefore, even though the width of the introduced molten glass increases, the molten glass flows while being concentrated on the central portion M due to the nature of the molten glass, such as viscosity, that affects a flow of the molten glass. As a result, it is more difficult to disperse heat at the central portion M than at the outer portions of the glass ribbon. This difference in temperature affects a flow of the glass ribbon, and as a result, there may be a problem in that when a flow velocity of the glass ribbon varies, a thickness of the glass ribbon becomes non-uniform, and glass particles are non-uniformly distributed.

Therefore, to cool the glass ribbon while making the temperature of the glass ribbon uniform over the overall width of the glass ribbon, the cooling module 1210 may supply the cooling gas to at least the central portion M based on the overall width in the second direction d2 that intersects the first direction d1 of the glass ribbon. When the cooling gas is supplied to at least the central portion M based on the overall width of the glass ribbon, a flow rate of the low-temperature cooling gas becomes relatively higher at the central portion M than at the outer portions close to the ends in the width direction of the glass ribbon. Further, the cooling gas and the glass ribbon exchange heat with each other more smoothly at the central portion M than at the outer portions. As a result, the temperature may decrease more greatly at the central portion M than at the outer portions. Therefore, the temperature may become uniform at the central portion M having a relatively high temperature and the outer portions having a relatively low temperature.

A cooling rate, which indicates a degree to which the glass ribbon is cooled by the cooling module 1210, may vary over the overall width of the glass ribbon. Specifically, the cooling rate may be lower at the outer portions outside the central portion M than at the central portion M in the overall width region of the glass ribbon. Here, the cooling rate may mean the amount of heat dissipated from a unit surface area of the glass ribbon per unit time or may mean the amount of decrease in temperature in the unit surface area of the glass ribbon per unit time. Since the cooling rate is lower at the outer portions than at the central portion M based on the overall width of the glass ribbon, the temperature may be uniform over the overall width region of the glass ribbon.

In the case in which a difference in cooling rate of the glass ribbon is made by adjusting a flow rate of the cooling gas being discharged from the discharge tube 1213, a discharge flow rate of the cooling gas supplied and discharged from the cooling module 1210 may vary over the overall width of the glass ribbon. Specifically, the discharge flow rate of the cooling gas may be lower at the outer portions outside the central portion M than at the central portion M based on the overall width region of the glass ribbon. The discharge flow rate may be adjusted by varying a lateral cross-sectional area a1 of the discharge tube 1213. Here, the cross-sectional area a1 may be an area of a cross section formed by cutting the discharge tube 1213 with an imaginary plane approximately parallel to the liquid surface of the glass ribbon. Specifically, the discharge flow rate may be adjusted such that the cross-sectional area a1 of the discharge tube 1213 through which the cooling gas is discharged toward the position of the central portion M of the glass ribbon is larger than the cross-sectional area a1 of the discharge tube 1213 through which the cooling gas is discharged toward the positions of the outer portions, in order to supply a larger amount of cooling gas to the central portion M. In addition, the discharge flow rate may be adjusted by varying a position at which the cooling gas is supplied in the chamber 1212 extending in the second direction d2. Specifically, when the cooling gas is concentratedly supplied to the central portion M of the chamber 1212, the cooling gas flow rate may be relatively high at the central portion M even though the cooling gas flows and diffuses toward the outer portions of the chamber 1212. Therefore, the discharge tube 1213 disposed at the position corresponding to the central portion M of the chamber 1212 may supply the cooling gas to the glass ribbon at a higher flow rate than the discharge tube 1213 disposed at the position corresponding to the outer portion of the chamber 1212.

In the entire region of the ceiling unit 1200 in the first direction d1, the cooling module 1210 may be disposed in a region corresponding to a section in which the width of the glass ribbon is decreased. The float glass manufacturing apparatus 1000 may include rollers 1110 disposed at both ends based on the width of the glass ribbon. The rollers 1110 may be disposed at a downstream side in the first direction d1 from the inlet of the float bath 1100 through which the molten glass is supplied. The multiple rollers 1110 may be disposed in the first direction d1 at both ends based on the width of the glass ribbon. As the rollers 1110 rotate in a state in which the rollers 1110 are in contact with the glass ribbon, the width and the thickness of the glass ribbon may be determined. For example, the rollers 1110 are disposed at a predetermined angle θ1 with respect to a line c parallel to the first direction d1 which is the flow direction of the glass ribbon, and the predetermined angle θ1 is formed in a direction toward lateral sides of the float bath 1100. Therefore, the width of the glass ribbon may be increased as the rollers 1110 rotate, and the thickness of the glass ribbon may be decreased as a rotational speed of the rollers 1110 is increased. The width of the glass ribbon, which is increased due to viscosity of the glass ribbon, may be gradually decreased after the glass ribbon passes through the section in which the rollers 1110 are disposed to increase the width of the glass ribbon in the second direction d2 which is the width direction. The cooling module 1210 is disposed in a corresponding region of the ceiling unit 1200 positioned above a section a2 in which the width of the glass ribbon is decreased, such that it is possible to more efficiently cool and form the glass ribbon. The section in which the rollers 1110 are disposed and a section upstream from the section in which the rollers 1110 are disposed may be a section in which the thickness of the glass ribbon is determined. If the cooling module 1210 is disposed in a corresponding region of the ceiling unit 1200 above this section and cools the glass ribbon, efficiency and process stability may deteriorate because the glass ribbon is heated and cooled at the same time. In addition, considering that a gas discharge position 1211 of the cooling module 1210 is close to the glass ribbon, it may be difficult to ensure an installation space for the rollers 1110. Therefore, to cool the glass ribbon, the cooling module 1210 may be disposed in the corresponding region of the ceiling unit 1200 positioned above the section a2 in which the width of the glass ribbon is decreased. According to a modified exemplary embodiment, the cooling module 1210 may be disposed in a region of the ceiling unit 1200 which is formed at an upper end of the central portion M of the glass ribbon that flows in a zone within about 3 m upstream from the roller 1110 disposed at the most downstream side among the rollers 1110. Therefore, the central portion M of the glass ribbon is cooled before the outer portions of the glass ribbon are cooled, and as a result, it is possible to decrease a difference in temperature in the width direction of the glass ribbon.

The heating module 1220 may heat the glass ribbon in order to induce annealing of the glass ribbon and to prevent solidification of the glass ribbon which occurs as the glass ribbon is cooled. The multiple heating modules 1220 may be disposed in the first direction d1 in the ceiling unit 1200. The heating module 1220 may include a heating unit 1221. The heating unit 1221 may be positioned between the float bath 1100 and the ceiling unit 1200 and may supply heat to the glass ribbon. The heating unit 1221 may be a heat generating member, and the multiple heating units 1221 may be provided. For example, the heating unit 1221 may have therein a coil capable of generating heat, and heat may be generated as an electric current is supplied to the coil. The heating units 1221 may be disposed in the second direction d2 and may supply heat over the overall width of the glass ribbon. The temperatures of the multiple heating units 1221 may be controlled so that the temperature may be uniform over the overall width of the glass ribbon.

The heating module 1220 including the heating units 1221 may be disposed to be spaced apart from the cooling module 1210 in the first direction d1. The order in which the cooling module 1210 and the heating unit 1221 are disposed in the first direction d1 may be designed in various ways in consideration of an optimum process for the glass ribbon. FIG. 1 illustrates one example in which the multiple heating units 1221 are disposed in the first direction d1 and the cooling modules 1210 are disposed between the zones in which the multiple heating units 1221 are disposed in the first direction d1.

If the heating unit 1221 is disposed to be closer to the glass ribbon from the ceiling unit 1200 than is the discharge position 1211 in the case in which the discharge position 1211 at which the cooling gas is discharged and the heating unit 1221 are disposed adjacent to each other in the first direction d1, cooling efficiency may deteriorate because the cooling gas may be heated by the heating unit 1221 while the cooling gas is discharged. To solve the problem, a first spacing distance h1, which is a distance between the float bath 1100 and the discharge position 1211 at which the cooling gas supplied by the cooling module 1210 is discharged, may be equal to a second spacing distance h2 which is a distance between the heating unit 1221 and the float bath 1100. The discharge position 1211 may be a position at which the discharged gas exits the discharge tube 1213, and the discharge position 1211 may be a lower end of the discharge tube 1213. The first spacing distance h1 may be a distance between the discharge position 1211 and the liquid surface of the glass ribbon that flows on the molten metal accommodated in the float bath 1100. The second spacing distance h2 may be a distance between the lower end of the heating unit 1221 and the liquid surface of the glass ribbon that flows on the molten metal accommodated in the float bath 1100. In the case in which the first spacing distance h1 is equal to the second spacing distance h2, the cooling gas discharged from the discharge tube 1213 may not be affected by the heating unit 1221, and the temperature of the cooling gas may not be increased.

FIG. 4 is a front view schematically illustrating a modified example of the float glass manufacturing apparatus according to the first exemplary embodiment of the present invention when viewed from the front side.

Referring to FIG. 4, the first spacing distance h1 may be smaller than the second spacing distance h2. In the case in which the first spacing distance h1 is smaller than the second spacing distance h2, the cooling gas discharged from the discharge tube 1213 may not be affected by the heating unit 1221, and the temperature of the cooling gas may not be increased. In addition, it is possible to improve cooling efficiency because the cooling gas may be supplied at the position closer to the glass ribbon in comparison with the case in which the first spacing distance h1 and the second spacing distance h2 are equal to each other.

The float glass manufacturing apparatus 1000 may further include sensor units 1230.

The sensor units 1230 may detect a change in temperature of the glass ribbon between an upstream point, which is positioned upstream from the cooling module 1210 in the first direction d1, and a downstream point positioned downstream from the cooling module 1210. The sensor unit 1230 may be disposed in an upper space of the ceiling unit 1200, and a radiation pyrometer for detecting heat may be used as the sensor unit 1230. The float glass manufacturing apparatus 1000 may adjust a flow rate of the cooling gas to be supplied into the chamber 1212 based on an aspect related to a change in temperature which is detected by the sensor unit 1230 and occurs in the width direction and the flow direction of the glass ribbon. That is, the float glass manufacturing apparatus 1000 may adjust a flow rate of the cooling gas to be supplied to the glass ribbon so that an optimum condition for making a temperature distribution uniform in the width direction of the glass ribbon is achieved.

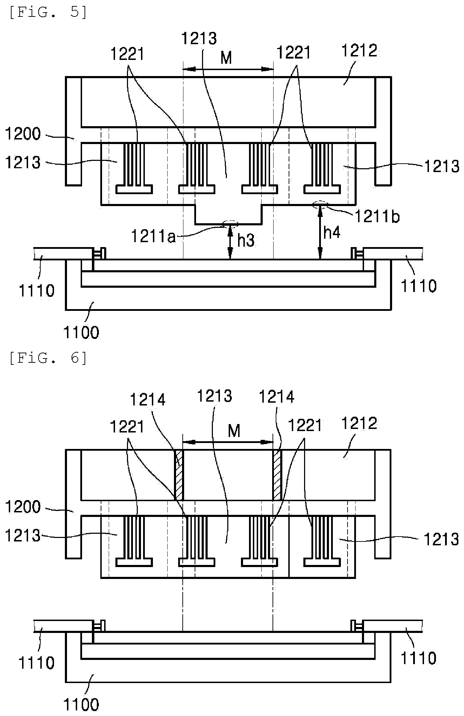

FIG. 5 is a front view schematically illustrating a float glass manufacturing apparatus according to a second exemplary embodiment of the present invention when viewed from the front side.

Referring to FIG. 5, the float glass manufacturing apparatus 1000 according to the second exemplary embodiment of the present invention is configured such that there is a section in which a height of the discharge position 1211 at which the cooling gas is discharged varies in the width direction of the glass ribbon. As a result, there may be a difference in cooling rate between the central portion M, which is positioned at a relative center based on the overall width of the glass ribbon, and the outer portions outside the central portion M. That is, a degree to which the discharge position 1211 at which the cooling gas supplied by the cooling module 1210 is discharged is spaced upward apart from the float bath 1100 may vary in the overall width of the glass ribbon. Specifically, regarding the degree to which the discharge position 1211 of the cooling gas is spaced upward apart from the float bath 1100, a distance h4 between the liquid surface of the glass ribbon and a discharge position 1211b at the outer portion outside the central portion M may be larger than a distance h3 between the liquid surface of the glass ribbon and a discharge position 1211a at the central portion M based on the overall width of the glass ribbon. In this case, the cooling gas is supplied to the outer portion of the glass ribbon from a higher position based on the liquid surface of the glass ribbon than the cooling gas being supplied to the central portion M. Therefore, the cooling gas more smoothly diffuses toward the periphery without being concentrated on the outer portion, such that the cooling rate may be lower at the outer portion than at the central portion M of the glass ribbon.

FIG. 6 is a front view schematically illustrating a float glass manufacturing apparatus according to a third exemplary embodiment of the present invention when viewed from the front side.

Referring to FIG. 6, the chamber 1212 of the float glass manufacturing apparatus 1000 according to the third exemplary embodiment of the present invention may be partitioned, by partition walls 1214, into multiple unit chambers 1212a in the second direction d2 that intersects the first direction d1 of the glass ribbon. The partition wall 1214 may be a member that may partition the chamber into spaces and block a flow of the gas between the partitioned spaces. A flow of the gas may be blocked between the unit chambers 1212a. In addition, the discharge tubes 1213 may be provided such that the number of and the positions of the discharge tubes 1213 correspond to the number of and the positions of the unit chambers 1212a. The temperature of the cooling gas being supplied into the unit chambers 1212a may vary according to the unit chambers 1212a. The cooling gas may be supplied, at different temperatures, to the glass ribbon through the discharge tubes 1213 formed to correspond to the unit chambers 1212a. Specifically, the cooling gas having a relatively low temperature is supplied into the unit chamber 1212a disposed above the ceiling unit 1200 corresponding to the central portion M based on the overall width of the glass ribbon, and the cooling gas having a relatively high temperature is supplied into the unit chamber 1212a disposed above the ceiling unit 1200 corresponding to the outer portion of the glass ribbon, such that the temperature of the cooling gas to be supplied to the central portion M may be relatively lower than the temperature of the cooling gas to be supplied to the outer portion of the glass ribbon. Therefore, the cooling rate may be lower at the outer portion than at the central portion M of the glass ribbon, and the temperature may be uniform over the overall width of the glass ribbon. Particularly, the cooling gas having a temperature of about 200°C to about 300°C is supplied to the central portion M of the glass ribbon, and the cooling gas having a temperature of about 600°C to about 700°C is supplied to the outer portion of the glass ribbon, such that the temperature may be uniform over the overall width of the glass ribbon.

An example of an operation of the float glass manufacturing apparatus 1000 according to the exemplary embodiment of the present invention will be described below.

The molten glass may be introduced into the inlet of the float bath 1100 and may flow on the upper surface of the molten metal accommodated in the float bath 1100 while forming the glass ribbon in the first direction d1. The width and the thickness of the glass ribbon may be determined by the multiple rollers 1110 disposed at both ends of the glass ribbon based on the width direction of the glass ribbon. The heating units 1221 may be disposed in the ceiling unit 1200 in the first direction d1 of the glass ribbon and may adjust the temperature of the glass ribbon so that the glass ribbon may be slowly cooled while flowing. The width of the glass ribbon may be decreased while the glass ribbon passes through the zone in which the rollers 1110 are disposed. The glass ribbon may be cooled by the cooling module 1210 disposed above the region in which the width of the glass ribbon is decreased. In this case, it is possible to obtain the entirely uniform temperature by making the cooling rate different between the central portion M and the outer portion based on the overall width of the glass ribbon. The glass ribbon may be slowly cooled while consistently flowing and formed to have a targeted width and a targeted thickness, and then the glass ribbon may be discharged through the outlet of the float bath 1100.

Effects of the float glass manufacturing apparatus 1000 according to the exemplary embodiment of the present invention will be described below.

The float glass manufacturing apparatus 1000 according to the exemplary embodiments of the present invention has the cooling module 1210 which supplies the cooling gas capable of cooling the glass ribbon while making a temperature uniform over an overall width of the glass ribbon, and as a result, it is possible to make a flow of the glass ribbon uniform and thus to manufacture plate glass with optically high quality.

According to the float glass manufacturing apparatus 1000 according to the exemplary embodiments of the present invention, the first spacing distance h1, which is the distance between the float bath 1100 and the discharge position 1211 through which the cooling gas supplied by the cooling module 1210 is discharged, may be equal to or smaller than the second spacing distance h2 which is the distance between the heating unit 1221 and the float bath 1100, and as a result, it is possible to prevent a deterioration in cooling efficiency caused by the influence of the heating unit 1221 on the cooling gas.

The float glass manufacturing apparatus 1000 according to the exemplary embodiments of the present invention has the heating module 1220 including the heating units 1221, and as a result, it is possible to prevent the solidification of the glass ribbon and to induce annealing of the glass ribbon by adjusting the temperature of the glass ribbon.

The float glass manufacturing apparatus 1000 according to the exemplary embodiments of the present invention includes the sensor unit 1230, and as a result, it is possible to adjust a flow rate of the cooling gas to be supplied into the chamber 1212 by detecting a change in temperature of the glass ribbon and thus to adjust the temperature of the glass ribbon by adjusting the flow rate of the cooling gas to be supplied to the glass ribbon.

The float glass manufacturing apparatus 1000 according to the first exemplary embodiment of the present invention may adjust the temperature of the glass ribbon by adjusting the flow rate of the cooling gas to be supplied to the glass ribbon and may reduce a difference in temperature over the overall width of the glass ribbon.

The float glass manufacturing apparatus 1000 according to the second exemplary embodiment of the present invention may adjust the temperature of the glass ribbon by adjusting the flow rate of the cooling gas to be supplied to the glass ribbon by varying the height of the discharge position 1211 at which the cooling gas is discharged, and may reduce a difference in temperature over the overall width of the glass ribbon.

The float glass manufacturing apparatus 1000 according to the third exemplary embodiment of the present invention includes the unit chambers 1212a formed by partitioning the chamber that accommodates the cooling gas, and as a result, it is possible to adjust the temperature of the glass ribbon by adjusting the temperature of the cooling gas accommodated in the unit chambers 1212a or adjusting the amount of cooling gas accommodated in the unit chambers 1212a, and it is possible to reduce a difference in temperature over the overall width of the glass ribbon.

While the present invention has been described with reference to the aforementioned exemplary embodiments, various modifications or alterations may be made without departing from the subject matter and the scope of the invention. Accordingly, the appended claims include the modifications or alterations as long as the modifications or alterations fall within the subject matter of the present invention.

## Claims

1. A float glass manufacturing apparatus comprising:
a float bath which accommodates molten metal and allows a glass ribbon to flow on a liquid surface of the molten metal in a first direction;
a ceiling unit which is disposed to be spaced upward apart from the float bath and elongated in the first direction; and
a cooling module which is disposed in at least a part of an entire region of the ceiling unit in the first direction and supplies downward a cooling gas that cools the glass ribbon.

2. The float glass manufacturing apparatus of claim 1, wherein the cooling module supplies the cooling gas at least to a central portion based on an overall width of the glass ribbon in a second direction that intersects the first direction.

3. The float glass manufacturing apparatus of claim 2, wherein a cooling rate, which indicates a degree to which the glass ribbon is cooled by the cooling module, varies over the overall width of the glass ribbon.

4. The float glass manufacturing apparatus of claim 3, wherein the cooling rate is lower at an outer portion outside the central portion than at the central portion based on the overall width of the glass ribbon.

5. The float glass manufacturing apparatus of claim 2, wherein a discharge flow rate at which the cooling gas supplied by the cooling module is discharged varies over the overall width of the glass ribbon.

6. The float glass manufacturing apparatus of claim 5, wherein the discharge flow rate of the cooling gas is lower at an outer portion outside the central portion than at the central portion based on the overall width of the glass ribbon.

7. The float glass manufacturing apparatus of claim 2, wherein a degree, to which a discharge position at which the cooling gas supplied by the cooling module is discharged is spaced upward apart from the float bath, varies over the overall width of the glass ribbon.

8. The float glass manufacturing apparatus of claim 7, wherein the degree to which the discharge position of the cooling gas is spaced upward apart from the float bath is larger at an outer portion outside the central portion than at the central portion based on the overall width of the glass ribbon.

9. The float glass manufacturing apparatus of claim 1, comprising:
a heating module which has a heating unit positioned between the float bath and the ceiling unit to heat the glass ribbon.

10. The float glass manufacturing apparatus of claim 9, wherein the heating unit and the cooling module are disposed to be spaced apart from each other in the first direction.

11. The float glass manufacturing apparatus of claim 9, wherein a first spacing distance, which is a distance between the float bath and a discharge position at which the cooling gas supplied by the cooling module is discharged, is equal to or smaller than a second spacing distance which is a distance between the heating unit and the float bath.

12. The float glass manufacturing apparatus of claim 1, wherein the cooling module is disposed in a region corresponding to a section in which a width of the glass ribbon is decreased in the entire region of the ceiling unit in the first direction.

13. The float glass manufacturing apparatus of claim 2, wherein the cooling module has multiple discharge tubes provided in the second direction to discharge the cooling gas.

14. The float glass manufacturing apparatus of claim 1, comprising:
a sensor unit which detects a change in temperature of the glass ribbon between an upstream point positioned upstream from the cooling module in the first direction and a downstream point positioned downstream from the cooling module.

15. The float glass manufacturing apparatus of claim 1, wherein the cooling module includes a chamber which is disposed above the ceiling unit and accommodates the cooling gas supplied from the outside, and a discharge tube which is disposed to vertically penetrate the ceiling unit and discharges downward the cooling gas accommodated in the chamber.

16. The float glass manufacturing apparatus of claim 15, wherein the chamber is partitioned, by a partition wall, into multiple unit chambers disposed in a second direction that intersects the first direction of the glass ribbon.
